# EUROPEAN PATENT APPLICATION

(11) **EP 4 087 186 A1**
(43) Date of publication of application: **09.11.2022**
(21) Application number: 21172229.3
(22) Date of filing: 05.05.2021
(51) Int. Cl.: H04L 12/14, H04W 40/24

(54) **COMMUNICATION NETWORK ARRANGEMENT AND METHOD FOR PROVIDING A COMMUNICATION SERVICE**

(71) Applicant: NTT DOCOMO, INC., Chiyoda-ku Tokyo 100-6150 (JP)
(72) Inventor: MUTIKAINEN, Jari, 80687 Munich (DE); GUERZONI, Riccardo, 80687 Munich (DE); MINOKUCHI, Atsushi, Tokyo, 100-6150 (JP)
(74) Representative: Viering, Jentschura & Partner mbB Patent- und Rechtsanwälte

(57) **Abstract**

According to one embodiment, a communication network arrangement is described comprising a first user plane component configured to provide a first communication session for a communication service, a policy requesting component configured to request, from a first policy controlling component, the creation and enforcement of a policy for the first communication session, a second user plane component configured to, as a result of a trigger for a user plane change for the communication service, provide a second communication session for the communication service and a control plane component configured to manage the second communication session and configured to notify the policy requesting component about a change of policy controlling component for the communication service if a second policy controlling component other than the first policy controlling component is selected to control policies for the second communication session.

## Description

The present disclosure relates to communication network arrangements and methods for providing a communication service.

A main feature of a mobile communication network is the ability to handle movement (i.e. mobility) of mobile terminals. In certain applications, the movement of a mobile terminal which uses a communication service may result in the desire or need to change the user plane components used for providing the communication service to the mobile terminal. This is in particular the case for communication services provided by Edge Computing (EC) since in Edge Computing, it is the aim to serve a mobile terminal with resources which are close to the mobile terminal. The application using the communication service may have quality requirements for the communication service which it may fulfil by requesting a certain policy for the communication service (or the communication session for providing the communication service).

Approaches are desirable which ensure that a policy for a communication service keeps being enforced after a user plane change.

According to one embodiment, a communication network arrangement is provided including a first user plane component configured to provide a first communication session for a communication service, a policy requesting component configured to request, from a first policy controlling component, the creation and enforcement of a policy for the first communication session, a second user plane component configured to, as a result of a trigger for a user plane change for the communication service, provide a second communication session for the communication service and a control plane component configured to manage the second communication session and configured to notify the policy requesting component about a change of policy controlling component for the communication service if a second policy controlling component other than the first policy controlling component is selected to control policies for the second communication session.

According to another embodiment, a method for providing a communication service according to the communication network arrangement described above is provided.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:
- FIG. 1: shows a mobile radio communication system, for example configured according to 5G (Fifth Generation) as specified by 3GPP (Third Generation Partnership Project), i.e. for example a 5GS.
- FIG. 2: illustrates a user plane (UP) change due to mobile terminal mobility.
- FIG. 3: shows a message flow diagram illustrating a UP change in SSC (Session and Service Continuity) mode SCC#2.
- FIG. 4: shows a message flow diagram illustrating a transmission of UP change control information via the AMF in SSC mode SCC#3.
- FIG. 5: shows a message flow diagram illustrating a UP change which involves a change of SMF (Session Management Function) and a change of PCF (Policy Control Function) according to an embodiment.
- FIG. 6: shows a communication network arrangement of a communication network according to an embodiment.
- FIG. 7: shows a flow diagram illustrating a method for providing a communication service.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. The various aspects of this disclosure are not necessarily mutually exclusive, as some aspects of this disclosure can be combined with one or more other aspects of this disclosure to form new aspects.

Various examples corresponding to aspects of this disclosure are described below:
Example 1 is a communication network arrangement as described above.
Example 2 is the communication network arrangement of Example 1, wherein the policy requesting component is configured to, in reaction to being notified about the change of policy controlling policy, the creation and enforcement of a policy for the second communication session from the second policy controlling component.
Example 3 is the communication network arrangement of Example 2, wherein the policy requesting component is configured to request the policy for the second communication session in accordance with the policy for the first communication session.
Example 4 is the communication network arrangement of Example 3, wherein the control plane component is configured to notify the policy requesting component about the change of policy controlling component for the communication service by transmitting a notification, wherein the notification includes an identification of the policy for the first communication session and the policy requesting component is configured to request the policy for the second communication session in accordance with the policy for the first communication session by using the identification of the policy for the first communication session.
Example 5 is the communication network arrangement of Example 3 or 4, wherein the control plane component is configured to notify the policy requesting component about the change of policy controlling component for the communication service by transmitting a notification, wherein the notification includes an identification of the second policy controlling component and the policy requesting component is configured to request the policy for the second communication session using the identification of the second policy controlling component.
Example 6 is the communication network arrangement of any one of Examples 1 to 5, wherein the trigger for the user plane change is a trigger for a change of the user plane component providing a communication session for the communication service for the mobile terminal.
Example 7 is the communication network arrangement of any one of Examples 1 to 6, wherein the control plane component is configured to manage the first communication session, and to initiate that the first user plane component stops providing the first communication session before the second user plane component has started providing the second communication session or after the second user plane component has started providing the second communication session.
Example 8 is the communication network arrangement of any one of Examples 1 to 6, including a further control plane component configured to manage the first communication session, wherein the further control plane component is configured to initiate that the first user plane component stops providing the first communication session before the second user plane component has started providing the second communication session or after the second user plane component has started providing the second communication session.
Example 9 is the communication network arrangement of any one of Examples 1 to 8, wherein the control plane component configured to manage the second communication session is configured to select the second policy controlling component.
Example 10 is the communication network arrangement of any one of Examples 1 to 9, wherein the policy controlling components are Policy Control Functions, the policy requesting component is an Application Function or a Network Exposure Function, the user plane components are User Plane Functions and the control plane component is a Session Management Function.
Example 11 is a method for providing a communication service including:
   providing a first communication session for a communication service by means of a first user plane component, requesting, by a policy requesting component, the creation and enforcement of a policy for the first communication session from a first policy controlling component, providing, as a result of a trigger for a user plane change for the communication service, a second communication session for the communication service by means of a second user plane component, determining whether a second policy controlling component other than the first policy controlling component controls policies for the second communication session and notifying the policy requesting component about a change of policy controlling component for the communication service if a second policy controlling component other than the first policy controlling component is selected to control policies for the second communication session.

It should be noted that one or more of the features of any of the examples above may be combined with any one of the other examples. In particular, the Examples described in context of the device are analogously valid for the method.

According to further embodiments, a computer program and a computer readable medium including instructions, which, when executed by a computer, make the computer perform the method of any one of the above Examples are provided.

In the following, various examples will be described in more detail.

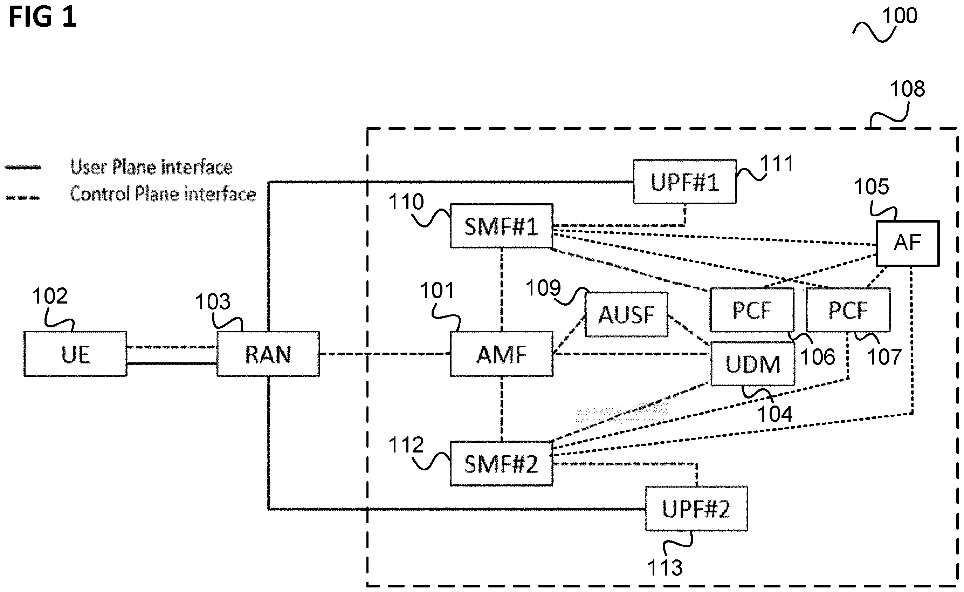

FIG. 1 shows a mobile radio communication system 100, for example configured according to 5G (Fifth Generation) as specified by 3GPP (Third Generation Partnership Project), i.e. for example a 5GS.

The mobile radio communication system 100 includes a mobile radio terminal device 102 such as a UE (user equipment), a nano equipment (NE), and the like. The mobile radio terminal device 102, also referred to as subscriber terminal, forms the terminal side while the other components of the mobile radio communication system 100 described in the following are part of the mobile radio communication network side, i.e. part of a mobile radio communication network (e.g. a Public Land Mobile Network PLMN).

Furthermore, the mobile radio communication system 100 includes a radio access network 103, which may include a plurality of radio access network nodes, i.e. base stations configured to provide radio access in accordance with a 5G (Fifth Generation) radio access technology (5G New Radio). It should be noted that the mobile radio communication system 100 may also be configured in accordance with LTE (Long Term Evolution) or another mobile radio communication standard but 5G is herein used as an example. Each radio access network node 103 may provide a radio communication with the mobile radio terminal device 102 over an air interface. It should be noted that the radio access network 103 may include any number of radio access network nodes.

The mobile radio communication system 100 further includes a core network (5GC) 108 including an Access and Mobility Management Function (AMF) 101 connected to the RAN 103 and a Unified Data Management (UDM) 104. Here and in the following examples, the UDM may further consist of the actual UE's subscription database, which is known as, for example, the UDR (Unified Data Repository). The core network 108 further includes an AUSF (Authentication Server Function) 109 and one or more PCFs (Policy Control Functions), in this example a first PCF 106 and a second PCF 107.

The core network 108 further includes multiple Session Management Functions (SMFs), in this example a first Session Management Function (SMF) 110 and a second Session Management Function (SMF) 112 and multiple User Plane Functions (UPFs), in this example a first User Plane Function (UPF) 111a second User Plane Function (UPF) 113. The SMFs 110, 112 are for handling PDU (Protocol Data Unit) sessions, i.e. for creating, updating and removing PDU sessions and managing session context with the User Plane Function (UPF).

The core network 108 further includes an application function (AF) 105. The AF 105 is shown to be directly connected to the SMFs 110, 112 and PCFs 106, 107 but may also be connected to them via an NEF (Network Exposure Function), in particular in case the AF 105 is maintained by a third party (i.e. a party other than the operation of the mobile radio communication system 100.

The AF 105 enables an application to request the 5G system 100 to support for example specific QoS (Quality of Service) policies or charging policies for a UE 102 that establishes a PDU session to provide a communication service for that application.

In particular, the AF 105 may perform an AF request to a respective PCF 106, 107 to create a policy in the PCF for a communication service (or communication session). The policy may for example include that a request for notifications for a UP path change or for a certain Quality of Service.

In Edge Computing, in particular, it is desirable that computational resources stay close to a UE. Therefore, when the UE 102 has an established PDU session to use a communication service and moves, the UPF 111, 113 (and the PDU session) may change.

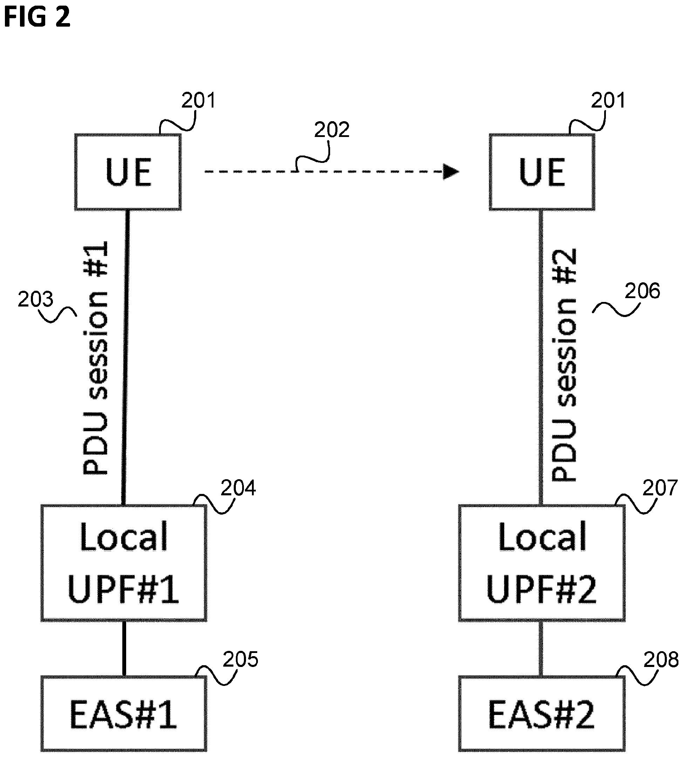

FIG. 2 illustrates a UP change due to mobile terminal mobility.

A UE 201 (e.g. corresponding to UE 102) moves from a first location to a second location as illustrated by arrow 202. In the first location, the UE has a first PDU session 203 by means of a first UPF 204, for example to communicate (via the first UPF 204) with a first Edge Application Server 205 to use a communication service.

The 5G technique SSC (Session and Service Continuity) allows the provider of the communication service to set a specific SSC mode for a given PDU Session, which in turn will determine the flow of packets across the network in mobility scenarios (like in the example of FIG. 2).

The SSC modes SSC#2 and SSC#3 apply to EC-based mission critical applications (e.g. automotive applications like platooning). The UE 201 can:
- In SSC#3: establish connectivity (i.e. the second PDU session 206) to the second UPF 207 before dropping the connectivity (i.e. the first PDU session 203) to the first UPF 204
- In SSC#2: establish connectivity (i.e. the second PDU session 206) to the second UPF 207 immediately after dropping the connectivity (i.e. the first PDU session 203) to the first UPF 204.

In the example of figure 2, the movement of the UE 201 to the second location triggers a UP path change. This means that when the UE 201 has moved, and if SSC modes SSC#2 or SSC#3 are used, the UE has a second PDU session 206 provided by a second UPF 207 to communicate (via the second UPF 207) with a second Edge Application server 208 to use the communication service.

During a user plane change (i.e. a change of UPFs 111, 113 as in FIG. 2), the SMF 110, 112 managing the PDU sessions 203, 206 exchanges notifications with the AF 105 and stores information provided by the AF to synchronize a UP change in the 5GS (e.g. in case of a EAS (Edge Application Server) relocation at the application layer as illustrated in FIG. 2).

In SSC modes SSC#2 and SSC#3, the SMF may also change with the UP change. For example, the respective AMF 101 may select a new SMF.

Furthermore, in SSC modes SSC#2 and SSC#3, the PCF 106, 107 may change with the UP change. For example, the respective AMF 101 or the respective SMF 112 (handling the PDU session after UP change) may select a different PCF 106, 107 for controlling policies for the second PDU session 206 than that which controlled the policy (or policies) for the first PDU session 203.

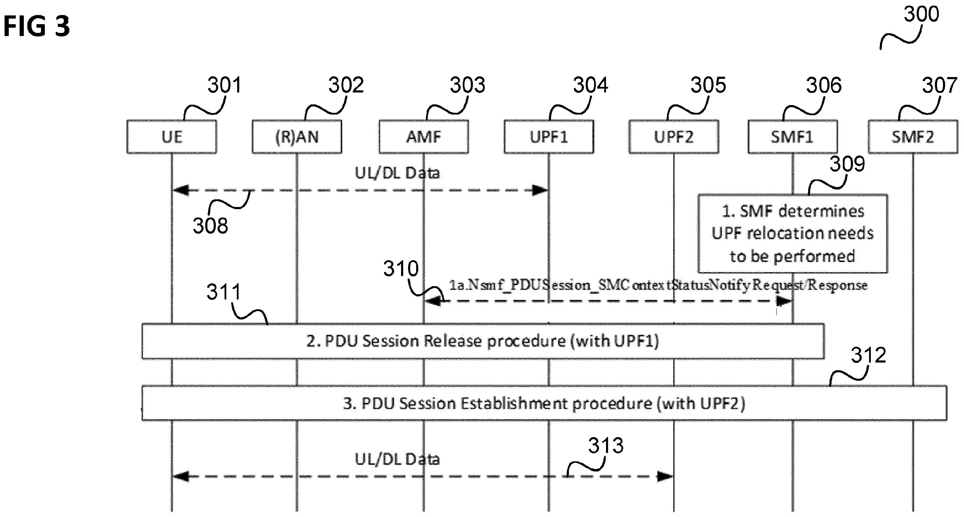

FIG. 3 shows a message flow diagram 300 illustrating a UP change in SSC mode SCC#2.

The message flow takes place between a UE 301, e.g. corresponding to UE 301, a RAN 302, an AMF 303, a first UPF 304, a second UPF 305, a first SMF 306 (e.g. corresponding to the first SMF 302) and a second SMF (target SMF) 307 (e.g. corresponding to second SMF 303).

Before the UP change, the UE 301 exchanges uplink and downlink data with the first UPF 304 in 308. This is done by a first PDU session which is managed by the first SMF 305.

It is assumed that in 309, the first SMF 305 determines that a UPF relocation (e.g. a UP change) should be performed.

Accordingly, in 310, the first SMF 306 sends a
Nsmf_PDUSession_SMContextNotifyRequest message to the AMF 303 to inform the AMF 303 that the first PDU Session is going to be released and the AMF 303 acknowledges with a Nsmf_PDUSession_SMContextNotifyResponse message.

In 311, the first PDU session is released.

In 312, a second PDU session is established. The second PDU session is provided by the second UPF 305 to the UE 301.

In 313, the UE 301 starts exchanging uplink and downlink data with the second UPF 305 via the second PDU session.

As explained above, as part of 312, the AMF 303 may select a new SMF, in this example the second SMF 307, for managing the second PDU session. Further, the AMF 303 or the second SMF 307 may select a new PCF, i.e. a different PCF is responsible for controlling policies for the second PDU session than for the first PDU session.

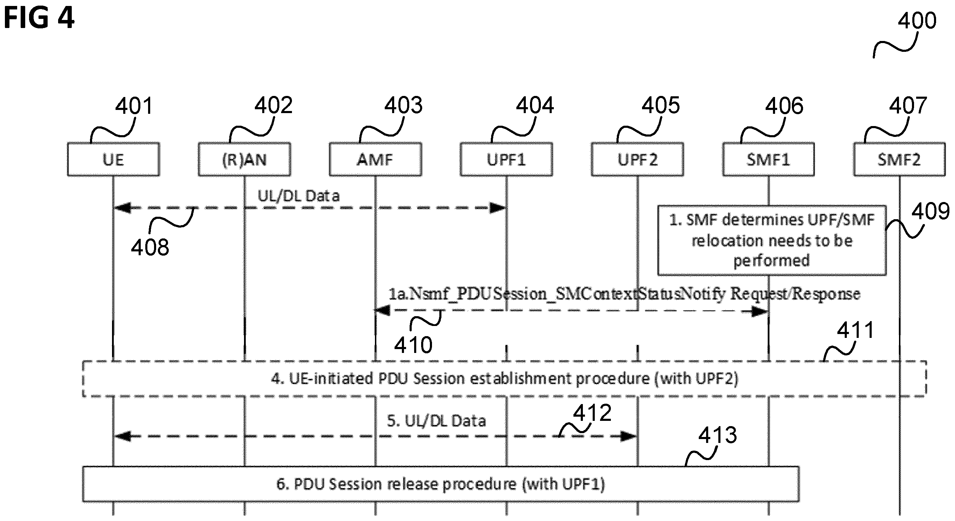

FIG. 4 shows a message flow diagram 400 illustrating a transmission of UP change control information via the AMF in SSC mode SCC#3.

The message flow takes place between a UE 401, e.g. corresponding to UE 301, a RAN 402, an AMF 403, a first UPF 404, a second UPF 405, a first SMF 406 (e.g. corresponding to the first SMF 302) and a second SMF (target SMF) 407 (e.g. corresponding to second SMF 303).

Before the UP change, the UE 401 exchanges uplink and downlink data with the first UPF 404 in 408. This is done by a first PDU session which is managed by the first SMF 405.

It is assumed that in 409, the first SMF 405 determines that a UPF relocation (e.g. a UP change) should be performed.

Accordingly, in 410, the first SMF 406 sends a
Nsmf_PDUSession_SMContextNotifyRequest message to the AMF 403 to inform the AMF 403 that the first PDU Session is going to be released and the AMF 403 acknowledges with a Nsmf_PDUSession_SMContextNotifyResponse message.

In 411, a second PDU session is established. The second PDU session is provided by the second UPF 405 to the UE 401.

In 412, the UE 401 starts exchanging uplink and downlink data with the second UPF 405 via the second PDU session.

In 413, the first PDU session is released.

As explained above, as part of 411, the AMF 403 may select a new SMF, in this example the second SMF 407, for managing the second PDU session. Further, the AMF 403 or the second SMF 407 may select a new PCF (referred to as target PCF), i.e. a different PCF is responsible for controlling policies for the second PDU session than for the first PDU session.

According to various embodiments, it is ensured that any policy that was defined (typically by an AF) for the first PDU session gets transferred to the target PCF (i.e. the PCF responsible for controlling policies for the second PDU session).

According to various embodiments, the target SMF (i.e. second SMF in the examples of FIG. 3 and FIG. 4) sends a notification to indicate a PCF change to the AF (possibly via an NEF). This notification may for example include a PCF ID of the of the target PCF (i.e. the PCF responsible for controlling policies for the second PDU session) and/or a reference to the old AF context in the AF (i.e. the AF session context for the first PDU session).

The AF may then re-create the policy (e.g. in accordance with the old AF context) in the target PCF by sending a (new) AF request to the target PCF.

This is described in more detail in the following.

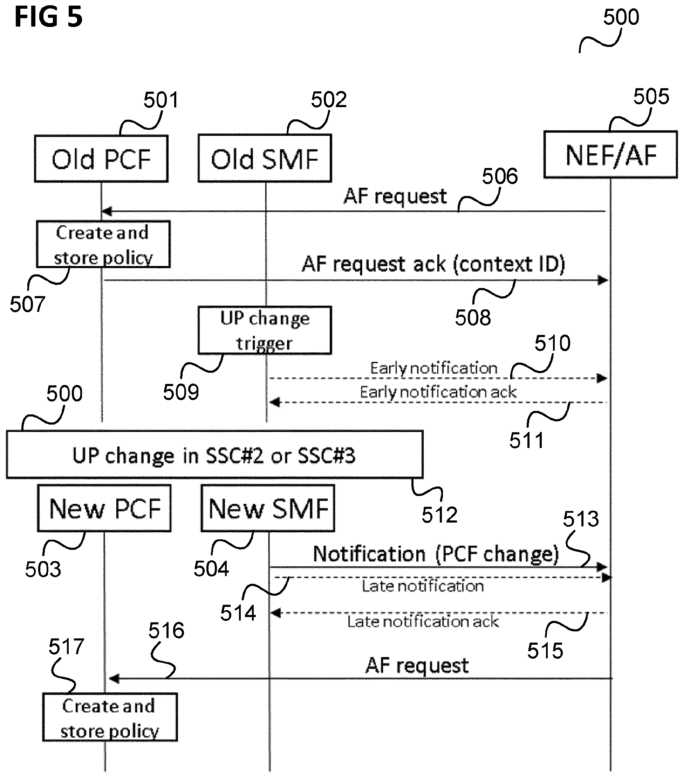

FIG. 5 shows a message flow diagram 500 illustrating a UP change which involves a change of SMF and a change of PCF according to an embodiment.

A first PCF 501, a first SMF 502, a second PCF 503, a second SMF 504 and an AF 505 (which may communicate via an NEF) are involved in the flow.

For example, the first SMF 502 manages the first PDU session 203 for the UE 201.

In 506, the AF 505 sends an AF request to the first PCF 501 (which is responsible to control policies for the first PDU session 203) to create and control a policy for the first PDU session 203.

Accordingly, in 507, the first PCF 501 creates and stores a policy for the first PDU session 203 and acknowledges the AF request (wherein it indicates an identification of the AF session context associated with the first PDU session 203) in 508.

When there is a trigger for a change of UP in 509, the first SMF 502 sends, in 510, an early notification (e.g. an NsmfEventExposureNotification) to the AF 505.

The early notification (which is optional) includes for example an Nsmf_EventExposure_Notify message. In case the second SMF 504 sends this message to the NEF (rather than directly to the AF), the NEF sends a corresponding Nnef_TrafficInfluence_Notify message to the AF.

In 511, the AF 505 responds with an (optional) early notification acknowledgement. It may for example use this acknowledgement to indicate that uplink data should be buffered because the second Edge Application Server 208 might not be immediately ready to receive the uplink data after the UP change.

In 512, the first SMF 502 performs the UP change (according to SSC mode SSC#2 as explained with reference to figure 3 or according to SSC mode SSC#3 as explained with reference to figure 4).

It is assumed that the SMF changes with the UP change. This means that the second PDU session 206 is managed by the second SMF 504. Further, it is assumed that the PCF changes with the UP change. This means that the second PCF 503 is responsible for controlling policies for the second PDU session 206. It should be noted that the PCF may change even if the SMF does not change.

To avoid that the policy created in 507 gets lost, i.e. that enforcement of the policy created in 507 is stopped after the UP change, the second SMF 504, in 513, notifies the AF 505 that the PCF has changed.

In 514, the second SMF 504 sends a late notification (which is optional) to the AF 505 to inform the AF 505 that the UP change has been completed and in 515, the AF 504 (optionally) acknowledges.

The notification of the PCF change may be part of the late notification or may be a separate notification.

The late notification includes for example an Nsmf_EventExposure_Notify message. In case the second SMF 504 sends this message to the NEF (rather than directly to the AF), the NEF sends a corresponding Nnef_TrafficInfluence_Notify message to the AF (which may, if the late notification is used for the PCF change indication, also include the indication of the PCF change).

In 516, the AF sends an AF request to the second PCF 503 to (re-)create the policy and to control the policy for the second PDU session 203.

Accordingly, in 517, the second PCF 503 creates and stores a policy for the second PDU session 206.

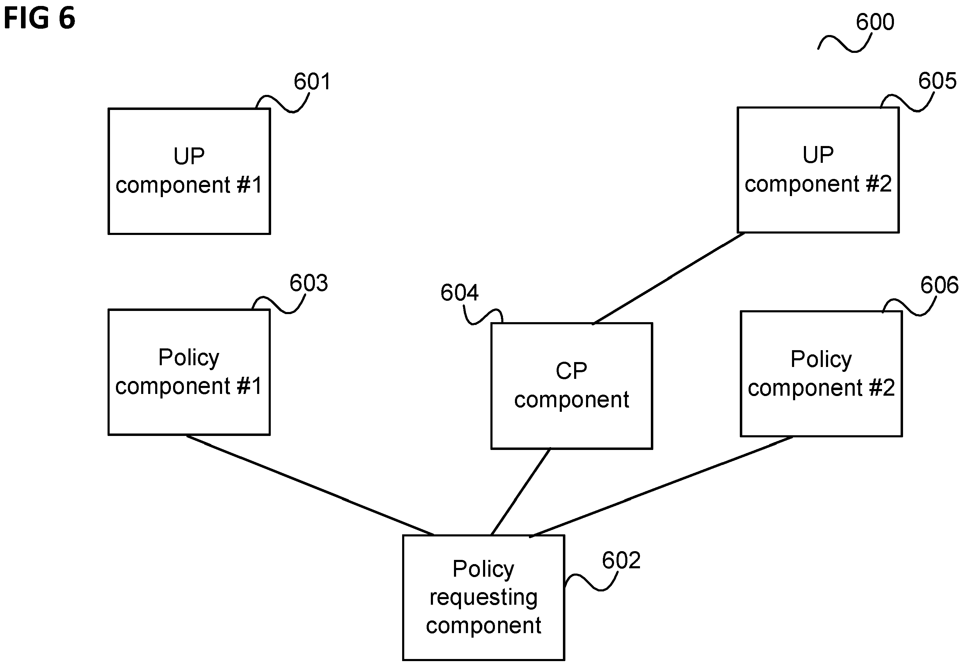

In summary, according to various embodiments, a communication network arrangement is provided as illustrated in FIG. 6.

FIG. 6 shows a communication network arrangement 600 of a communication network according to an embodiment.

The communication network arrangement 600 includes a first user plane component 601 configured to provide a first communication session for a communication service and a policy requesting component 602 configured to request, from a first policy controlling 603 component, the creation and enforcement of a policy for the first communication session. (The first policy controlling component 603 is configured to create and enforce the policy for the first communication session in response to the request).

The communication network arrangement 600 further includes a second user plane component 604 configured to, as a result of a trigger for a user plane change for the communication service, provide a second communication session for the communication service.

Further, the communication network arrangement 600 includes a control plane component 605 configured to manage the second communication session and configured to notify the policy requesting component about a change of policy controlling component for the communication service if a second policy controlling component 606 other than the first policy controlling component 603 is selected (and, as a result, configured) to control policies for the second communication session.

According to various embodiments, in other words, a component which has requested creation of a policy for a communication session for a communication service is informed in case the component which is responsible for controlling policies for communication sessions for the communication service changes.

This allows the component which has requested a policy to request re-creation of the policy and to ensure that after a user plane change including a change of the policy controlling component the policy is still enforced.

For example, an AF performs a transaction with a first PCF to create a policy related to a communication session and during usage of the communication session, a UP change procedure is performed involving a change of PCF (to a second PCF). The SMF managing the new communication session (which may or may not be the same as managing the original communication session) provides the AF with a notification including an indication of the PCF change. The AF receiving the indication about the PCF change indication re-creates the policy with the second PCF by performing an (additional) transaction with the second PCF. The notification including the indication of the PCF change may also include an AF session context ID that the AF can use to determine the policy to be re-created. The notification including the indication about the PCF change may also include the PCF ID or address of the second PCF. The UP change may include an SMF change from a first SMF to a second SMF. In that case, the second SMF may receive an indication that a PCF change event is required, i.e. that the AF should be informed about the PCF change, and an address or URI of the AF (such that it knows where to send the information about the PCF change) from the first SMF. Using this information, the second SMF sends the notification including the indication about the PCF change to the AF.

The policy requesting component may be an Application Function, possibly communicating via a Network Exposure Function. In the latter case, the Network Exposure Function may also itself be seen as the policy requesting component.

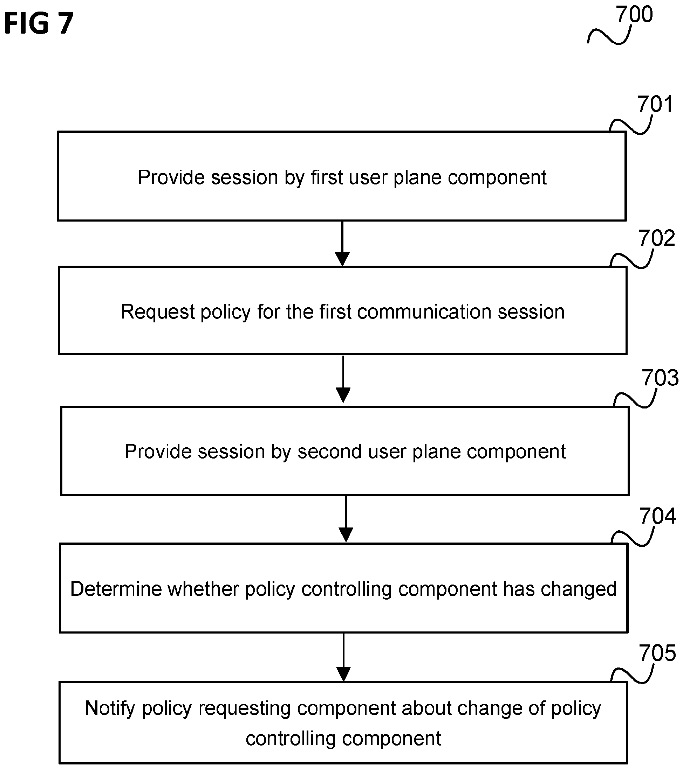

A communication network (or system) for example carries out a method as illustrated in FIG. 7.

FIG. 7 shows a flow diagram 700 illustrating a method for providing a communication service.

In 701, a first communication session is provided for a communication service by means of a first user plane component.

In 702, a policy requesting component requests the creation and enforcement of a policy for the first communication session from a first policy controlling component.

In 703, as a result of a trigger for a user plane change for the communication service, a second communication session is provided for the communication service by means of a second user plane component.

In 704 it is determined whether a second policy controlling component other than the first policy controlling component is selected to control (and, as a result, controls) policies for the second communication session.

In 705, the policy requesting component is notified about a change of policy controlling component for the communication service if a second policy controlling component other than the first policy controlling component is selected to control policies for the second communication session.

It should be noted that the operations of the method of FIG. 7 do not need to be performed strictly in the order shown. In particular, a session is managed while it is provided and both sessions may be provided (and managed) in parallel (e.g. shortly after the user plane change).

The components of the communication network arrangement may for example be implemented by one or more circuits. A "circuit" may be understood as any kind of a logic implementing entity, which may be special purpose circuitry or a processor executing software stored in a memory, firmware, or any combination thereof. Thus a "circuit" may be a hard-wired logic circuit or a programmable logic circuit such as a programmable processor, e.g. a microprocessor. A "circuit" may also be a processor executing software, e.g. any kind of computer program. Any other kind of implementation of the respective functions described above may also be understood as a "circuit".

While specific aspects have been described, it should be understood by those skilled in the art that various changes in form and detail may be made therein without departing from the spirit and scope of the aspects of this disclosure as defined by the appended claims. The scope is thus indicated by the appended claims and all changes which come within the meaning and range of equivalency of the claims are therefore intended to be embraced.

## Claims

1. A communication network arrangement comprising:
a first user plane component configured to provide a first communication session for a communication service;
a policy requesting component configured to request, from a first policy controlling component, the creation and enforcement of a policy for the first communication session;
a second user plane component configured to, as a result of a trigger for a user plane change for the communication service, provide a second communication session for the communication service; and
a control plane component configured to manage the second communication session and configured to notify the policy requesting component about a change of policy controlling component for the communication service if a second policy controlling component other than the first policy controlling component is selected to control policies for the second communication session.

2. The communication network arrangement of claim 1, wherein the policy requesting component is configured to, in reaction to being notified about the change of policy controlling policy, the creation and enforcement of a policy for the second communication session from the second policy controlling component.

3. The communication network arrangement of claim 2, wherein the policy requesting component is configured to request the policy for the second communication session in accordance with the policy for the first communication session.

4. The communication network arrangement of claim 3, wherein the control plane component is configured to notify the policy requesting component about the change of policy controlling component for the communication service by transmitting a notification, wherein the notification includes an identification of the policy for the first communication session and the policy requesting component is configured to request the policy for the second communication session in accordance with the policy for the first communication session by using the identification of the policy for the first communication session.

5. The communication network arrangement of claim 3 or 4, wherein the control plane component is configured to notify the policy requesting component about the change of policy controlling component for the communication service by transmitting a notification, wherein the notification includes an identification of the second policy controlling component and the policy requesting component is configured to request the policy for the second communication session using the identification of the second policy controlling component.

6. The communication network arrangement of any one of claims 1 to 5, wherein the trigger for the user plane change is a trigger for a change of the user plane component providing a communication session for the communication service for the mobile terminal.

7. The communication network arrangement of any one of claims 1 to 6, wherein the control plane component is configured to manage the first communication session, and to initiate that the first user plane component stops providing the first communication session before the second user plane component has started providing the second communication session or after the second user plane component has started providing the second communication session.

8. The communication network arrangement of any one of claims 1 to 6, comprising a further control plane component configured to manage the first communication session, wherein the further control plane component is configured to initiate that the first user plane component stops providing the first communication session before the second user plane component has started providing the second communication session or after the second user plane component has started providing the second communication session.

9. The communication network arrangement of any one of claims 1 to 8, wherein the control plane component configured to manage the second communication session is configured to select the second policy controlling component.

10. The communication network arrangement of any one of claims 1 to 9, wherein the policy controlling components are Policy Control Functions, the policy requesting component is an Application Function or a Network Exposure Function, the user plane components are User Plane Functions and the control plane component is a Session Management Function.

11. A method for providing a communication service comprising:
providing a first communication session for a communication service by means of a first user plane component;
requesting, by a policy requesting component, the creation and enforcement of a policy for the first communication session from a first policy controlling component;
providing, as a result of a trigger for a user plane change for the communication service, a second communication session for the communication service by means of a second user plane component;
determining whether a second policy controlling component other than the first policy controlling component controls policies for the second communication session; and
notifying the policy requesting component about a change of policy controlling component for the communication service if a second policy controlling component other than the first policy controlling component is selected to control policies for the second communication session.

## Amended claims

### Amended claims in accordance with Rule 137(2) EPC.

1. A communication network arrangement (600) comprising:
a first user plane component (601, 111) configured to provide a first communication session for a communication service;
a policy requesting component (105, 505, 602) configured to request, from a first policy controlling component (106, 603), the creation and enforcement of a policy for the first communication session;
a second user plane component (601, 113) configured to, as a result of a trigger for a user plane change for the communication service, provide a second communication session for the communication service; and
a control plane component (604, 112) configured to manage the second communication session and configured to notify the policy requesting component (105, 505, 602) about a change of policy controlling component for the communication service if a second policy controlling component (107, 606) other than the first policy controlling (106, 603) component is selected to control policies for the second communication session.

2. The communication network arrangement of claim 1, wherein the policy requesting component (105, 505, 602) is configured to, in reaction to being notified about the change of policy controlling component, request the creation and enforcement of a policy for the second communication session from the second policy controlling component (503, 606, 107).

3. The communication network arrangement of claim 2, wherein the policy requesting component (105, 505, 602) is configured to request the policy for the second communication session in accordance with the policy for the first communication session.

4. The communication network arrangement of claim 3, wherein the control plane component is configured to notify the policy requesting component (105, 505, 602) about the change of policy controlling component for the communication service by transmitting a notification, wherein the notification includes an identification of the policy for the first communication session and the policy requesting component (105, 505, 602) is configured to request the policy for the second communication session in accordance with the policy for the first communication session by using the identification of the policy for the first communication session.

5. The communication network arrangement of claim 3 or 4, wherein the control plane component is configured to notify the policy requesting component (105, 505, 602) about the change of policy controlling component for the communication service by transmitting a notification, wherein the notification includes an identification of the second policy controlling component (606, 107) and the policy requesting component is configured to request the policy for the second communication session using the identification of the second policy controlling component (606, 107).

6. The communication network arrangement of any one of claims 1 to 5, wherein the trigger for the user plane change is a trigger for a change of the user plane component (601,605) providing a communication session for the communication service for the mobile terminal.

7. The communication network arrangement of any one of claims 1 to 6, wherein the control plane component (604, 110) is configured to manage the first communication session, and to initiate that the first user plane component (601, 111) stops providing the first communication session before the second user plane component (601, 113) has started providing the second communication session or after the second user plane component (601, 113) has started providing the second communication session.

8. The communication network arrangement of any one of claims 1 to 6, comprising a further control plane component configured to manage the first communication session, wherein the further control plane component is configured to initiate that the first user plane component (601, 111) stops providing the first communication session before the second user plane component (601, 113) has started providing the second communication session or after the second user plane component (601, 113) has started providing the second communication session.

9. The communication network arrangement of any one of claims 1 to 8, wherein the control plane component (604, 112) configured to manage the second communication session is configured to select the second policy controlling component (606, 107).

10. The communication network arrangement of any one of claims 1 to 7, wherein the policy controlling components (603, 606) are Policy Control Functions (106, 107), the policy requesting component (105, 505, 602) is an Application Function (105) or a Network Exposure Function (505), the user plane components (601, 605) are User Plane Functions (111, 113) and the control plane component (604) is a Session Management Function (110, 112).

11. A method (700) for providing a communication service comprising:
providing (701) a first communication session for a communication service by means of a first user plane component (601, 111);
requesting (702), by a policy requesting component (105, 505, 602), the creation and
enforcement of a policy for the first communication session from a first policy controlling component (603, 106);
providing (703), as a result of a trigger for a user plane change for the communication service, a second communication session for the communication service by means of a second user plane component (601, 113);
determining (704) whether a second policy controlling component (606, 107) other than the first policy controlling component (603, 106)controls policies for the second communication session; and
notifying (705) the policy requesting component (105, 505, 602) about a change of policy controlling component for the communication service if a second policy controlling component (606) other than the first policy controlling component (603, 106) is selected to control policies for the second communication session.

12. A computer readable medium comprising instructions which, when executed by a computer, cause the computer to carry out the steps of the method according to claim 11.
